(19) Europäisches Patentamt / European Patent Office / Office européen des brevets

(11) **EP 3 476 054 B1**

(12) **FASCICULE DE BREVET EUROPEEN**

(45) Date de publication et mention de la délivrance du brevet:
**13.12.2023 Bulletin 2023/50**

(21) Numéro de dépôt: **17742800.0**

(22) Date de dépôt: **19.06.2017**

(51) Classification Internationale des Brevets (IPC):
**H04B 1/7136** *(2011.01)* **H04L 5/00** *(2006.01)*
**H04W 72/02** *(2009.01)*

(52) Classification Coopérative des Brevets (CPC):
**H04B 1/7136; H04L 5/0012; H04L 5/0053**

(86) Numéro de dépôt international:
**PCT/FR2017/051606**

(87) Numéro de publication internationale:
**WO 2017/220912 (28.12.2017 Gazette 2017/52)**

(54) **EMISSION/RÉCEPTION DE DONNÉES PAR SAUTS D'ÉCARTS EN FRÉQUENCE, PERFECTIONNÉES**

VERBESSERTES SENDEN/EMPFANGEN VON DATEN DURCH FREQUENZSPRUNGVERFAHREN

IMPROVED TRANSMISSION/RECEPTION OF DATA BY FREQUENCY HOPPING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2016 FR 1655816**

(43) Date de publication de la demande:
**01.05.2019 Bulletin 2019/18**

(73) Titulaire: **Orange**
**92130 Issy-les-Moulineaux (FR)**

(72) Inventeur: SCHWOERER, Jean
Grenoble 38100 (FR)

(56) Documents cités:
WO-A2-2004/054280     GB-A- 2 277 231
US-A1- 2004 228 267

**Description**

La présente invention concerne l'émission/réception de données par sauts de fréquence par exemple dans un système de communication radiofréquences.

Des systèmes de communication radiofréquences à très faible débit et longue portée sont de plus en plus répandus. Cette longue portée exprime en réalité la capacité du système radio à supporter une atténuation plus importante que de coutume dans le canal radio, ce qui requiert une sensibilité accrue du récepteur.

Pour atteindre ces hautes sensibilités, il est habituellement proposé de réduire autant que possible, au prix de débit binaire très faible, la bande passante du signal radio. En effet, plus cette bande passante est faible, plus la puissance de bruit collecté par le récepteur est faible, alors que l'énergie du signal d'intérêt reste identique.

La contrepartie étant un débit d'information particulièrement bas, cette approche reste réservée à des émetteurs à très faibles coût et complexité et n'ayant que de très faibles volumes de données à émettre. A titre d'exemple, il s'agit typiquement de capteurs autonomes disséminés dans un environnement à surveiller (comme des objets connectés en réseau LoRaWan® ou Sigfox®, ou encore GPRS/3G, LTE/4G, ou autres), ou d'éléments d'un « Internet des Objets ».

La conséquence logique de la diminution de la bande passante du canal radio est son évolution vers un modèle non sélectif en fréquence. Ce choix peut entraîner des phénomènes d'évanouissement profond touchant l'intégralité du signal radio. Afin d'éviter que ce phénomène ne puisse altérer significativement le lien radio, il est important que leurs opérateurs dimensionnent le bilan de liaison du lien radio avec une importante marge de fonctionnement, ce qui limite d'autant la portée effective de ces réseaux.

C'est précisément pour lutter contre ce phénomène typique des canaux à bande étroite que les techniques d'étalement de spectre, et typiquement le saut de fréquence (« Frequency Hop ») ont été développés. Le saut de fréquence consiste, en termes généraux, à émettre/recevoir un signal séquentiellement sur plusieurs fréquences successives distinctes. On définit donc une séquence temporelle de sauts successifs en fréquence, à l'émetteur et au récepteur. Les documents GB 2 277 231 A, Us 2004/0228267 A1 et WO 2004/054280 décrivent des procédés de communication utilisant des techniques d'étalement de spectre par sauts de fréquence.

Cependant, l'utilisation de cette technique nécessite, de la part des étages radio des terminaux, un niveau de performance élevé (en termes de stabilité et de rapidité des oscillateurs) et une synchronisation de très bonne qualité, ce qui se révèle à la fois complexe sur le plan électronique, et coûteux en matière de consommation énergétique.

Ces techniques demeurent donc hors de portée des équipements les plus contraints.

La présente invention vient améliorer la situation.

Elle propose à cet effet un procédé de télécommunication de données par sauts de fréquence dans une première bande de fréquences, tel que défini par la revendication 1. Les revendications dépendantes de cette revendication définissent des modes de réalisation.

Selon ce procédé, les sauts de fréquence suivent une séquence temporelle prédéterminée, connue au moins par un émetteur des données, caractérisé en ce qu'il comporte les étapes, mises en oeuvre par ledit émetteur de données:

- Définir, à partir d'un tirage pseudo-aléatoire, des valeurs successives d'écarts respectifs en fréquence pour déterminer la séquence temporelle de sauts à partir d'une première fréquence,
- Emettre à destination d'au moins un récepteur des données

  • à une première fréquence, ladite première fréquence étant choisie aléatoirement dans la première bande de fréquences,
  • puis à des fréquences successives respectant, à partir de la première fréquence, lesdites valeurs successives d'écarts respectifs en fréquence, lesdites valeurs successives d'écarts en fréquence définissant, à la réception, une succession de fréquences de réception de données utiles à recevoir dudit émetteur de données.

Ainsi, le schéma de saut de fréquence est adapté aux contraintes des systèmes utilisant usuellement les approches dites « Ultra Narrow Band » sans pour autant en avoir les limitations et tout en conservant les propriétés de longue portée du système. La transmission est alors répartie sur un ensemble de canaux différents, assurant de fait la répartition de l'information sur une portion importante du spectre (c'est-à-dire en pratique, possiblement sur l'ensemble de la bande de fréquences du réseau) et se placer ainsi sur un canal large bande, donc sélectif en fréquence.

La « première bande de fréquences » précitée, dans laquelle est tirée aléatoirement la première fréquence, peut correspondre quant à elle à tout le spectre d'émission/réception accessible.

Dans une réalisation, le procédé comporte une étape, préalable à l'émission, dans laquelle :

- après un tirage aléatoire de la première fréquence, l'émetteur écoute dans la première bande ladite première fréquence avant toute émission, pour une vérification de disponibilité d'un canal d'émission correspondant à la première fréquence, et :

- si le canal est libre, procéder à une émission sur la première fréquence puis à des fréquences successives respectant lesdits écarts en fréquence,
- si le canal est occupé :

  - choisir aléatoirement une autre première fréquence,
  - et répéter la vérification de disponibilité du canal d'émission correspondant, jusqu'à trouver un canal disponible.

Une telle réalisation permet avantageusement de choisir judicieusement la meilleure « première fréquence » à partir de laquelle l'émission peut s'effectuer selon la séquence précitée.

Selon l'invention, , l'émetteur envoie :

- des données de synchronisation à la première fréquence, puis à un premier jeu de fréquences successives avec des écarts en fréquence entre les fréquences successives de ce premier jeu, à partir de la première fréquence, qui sont représentatifs desdites valeurs successives d'écarts respectifs en fréquence de la séquence temporelle,
- puis, des données utiles, à la première fréquence puis à un deuxième jeu de fréquences successives respectant, à partir de la première fréquence, lesdites valeurs successives d'écarts respectifs en fréquence de ladite séquence temporelle.

Ainsi, dans cette réalisation, l'émetteur émet, à un instant aléatoire, une première portion de données (comprenant par exemple un signal de synchronisation), sur un canal choisi aléatoirement et sans accord préalable avec le récepteur. Puis la suite du signal est transmise en observant une série de déplacement dans le spectre selon une séquence de sauts pseudo-aléatoires et à un rythme, connus au moins de l'émetteur et éventuellement du récepteur dans une première forme de réalisation.

Dans une réalisation, le premier jeu est identique au deuxième jeu.

Ainsi, la première fréquence d'émission est conservée pour la synchronisation, comme pour l'émission des données utiles, ainsi que les écarts en fréquence successifs. Toutefois, cette réalisation admet des variantes. Par exemple, les fréquences du premier jeu peuvent être toutes dans une bande de fréquences plus étroite qu'une bande de fréquences comportant les fréquences du deuxième jeu. Cette réalisation permet par exemple de limiter, auprès du récepteur, la complexité de recherche des fréquences utilisées pour la synchronisation, dans une bande de fréquences réduite. Elle peut être typiquement plus étroite que la première bande de fréquences précitée.

Dans une réalisation, l'émetteur répète un nombre de fois prédéterminé ladite séquence d'émission de données, à ladite première fréquence puis auxdites fréquences successives.

Ainsi, la séquence de sauts n'est pas spécifiée comme une suite de canaux ou de fréquences mais uniquement comme une suite de changements de fréquences de plus ou moins N Hz. Ainsi, l'ensemble de la séquence est définie uniquement de manière relative par rapport à la transmission initiale. Les fréquences absolues sur lesquelles les transmissions sont effectuées ne sont pas connues du récepteur (ni même, possiblement, de l'émetteur, pour réduire sa complexité notamment). Lorsque l'intégralité de la séquence a été parcourue, alors dans cette réalisation, elle est réutilisée en boucle autant de fois que nécessaire (par redondance de communication). Cette redondance de communication permet au récepteur d'identifier complètement toute la séquence de sauts. S'il est choisi d'envoyer dans un premier temps un signal de synchronisation avant d'envoyer des données utiles, lorsque l'intégralité du signal de synchronisation a été émis (émission d'au moins une itération de la séquence de sauts), l'émetteur commence à transmettre des données utiles, en utilisant soit la même séquence de sauts, soit une autre séquence définie en fonction de la séquence de sauts du signal de synchronisation.

Dans une réalisation, une partie au moins des écarts respectifs en fréquence de la séquence contribue à définir un identifiant de l'émetteur.

Par exemple, une première partie des écarts respectifs en fréquence de la séquence peut contribuer à définir un groupe d'appartenance de l'émetteur, tandis qu'une seconde partie des écarts respectifs en fréquence de la séquence peut contribuer à définir l'identifiant propre à l'émetteur dans ce groupe.

En outre, les sauts d'une fréquence à l'autre dans la séquence sont définis à des intervalles de temps successifs qui sont variables dans la séquence, et ces intervalles de temps successifs peuvent aussi contribuer en outre à définir un identifiant de l'émetteur.

Ainsi, dans une réalisation avantageuse mais optionnelle, il est possible de coder de l'information, telle que par exemple l'adresse de l'émetteur, dans la séquence de sauts en fréquence elle-même en modifiant la valeur du saut de fréquence en fonction du symbole d'information à porter. Par exemple, les écarts en fréquence définissant le saut de fréquence peuvent caractériser l'émetteur. Dans ce cas particulier, la connaissance de l'adresse de l'émetteur peut permettre, à titre d'exemple, l'utilisation d'une séquence de sauts différente, propre au couple émetteur/récepteur, pour la suite de l'échange. Par exemple, la séquence de sauts identifiée pendant la synchronisation peut permettre d'identifier de l'échange. Par exemple, la séquence de sauts identifiée pendant la synchronisation peut permettre d'identifier l'émetteur et de communiquer avec l'émetteur selon une autre séquence de sauts, prédéterminée (par exemple stockée dans une base de données en correspondance d'un identifiant quelconque de l'émetteur).

Selon l'invention, un récepteur, destinataire des données, balaie la première bande de fréquences pour identifier la première fréquence et une première partie au moins desdites fréquences successives respectant, à partir de la première fréquence, lesdites valeurs successives d'écarts respectifs en fréquence. En particulier, cette première partie au moins des fréquences successives permet au récepteur d'identifier la succession de fréquences de réception de données utiles à recevoir de l'émetteur de données.

Selon l'invention, le récepteur est connecté à une base de données stockant des tirages pseudo-aléatoires définissant des séquences utilisées à l'émission par un ou plusieurs émetteurs, et, à partir de ladite première partie au moins des fréquences successives, le récepteur :

- détermine des écarts en fréquence successifs à partir de la première fréquence identifiée par le balayage de la première bande de fréquences,
- compare lesdits écarts en fréquence successifs, à des écarts en fréquence de séquences correspondant aux tirages pseudo-aléatoires stockés dans la base, et
- identifie, à l'issue de ladite comparaison, la séquence temporelle utilisée par l'émetteur pour recevoir des données utiles sur les fréquences successives de la séquence ainsi identifiée.

Selon l'invention, la base de données peut stocker des tirages pseudo-aléatoires définissant des séquences utilisées pour l'émission de données de synchronisation. Dans ce cas, l'émetteur et le récepteur utilisent une règle prédéterminée, connue de l'émetteur et du récepteur, pour définir une séquence pour l'émission et respectivement la réception des données utiles à partir d'une séquence utilisée pour l'émission de données de synchronisation.

Les données sont donc transmises non plus sur un seul canal mais au contraire sur l'ensemble de la bande accessible au système, ce qui permet de retrouver les avantages d'un canal large bande, tout en préservant la sensibilité de fréquences sélectives. Il est préférable de prévoir un schéma de redondance et d'entrelacement dimensionné de manière à assurer suffisamment d'indépendance entre les données transmises sur un même canal.

Ainsi, le récepteur, quand à lui, surveille l'intégralité de la bande radiofréquences d'intérêt, puisqu'il ne connaît pas la première fréquence exacte sur laquelle l'émetteur transmet, en réalisant une analyse spectrale permanente d'une résolution en accord avec la largeur de bande instantanée du système bande étroite. Lorsque l'émission commence, il observe l'apparition d'un pic d'énergie dans une sous-bande donnée puis une série successive de pics d'énergie reproduisant une séquence de sauts en fréquence connue. L'identification de cette séquence, basée sur l'écart entre chacun de ces pics d'énergie, permet au récepteur de reconnaître un signal d'intérêt parmi du bruit. Comme il est naturellement possible, suite aux aléas du canal radio, que certains de ces pics d'énergie ne soit pas détectables, la séquence peut être émise de façon redondante pour déterminer une séquence avec un degré de certitude raisonnable et l'identification de la séquence réelle peut s'effectuer par comparaison de la séquence à des séquences connues du récepteur dans une base de données de séquences connues, dans une forme de réalisation.

Une fois la séquence de sauts identifiée, le récepteur est maintenant synchrone avec l'émetteur dans la mesure où il peut prédire les sauts de fréquence opérés par l'émetteur. La transmission de données utile peut alors débuter.

Par ailleurs, on entend par « séquence pseudo-aléatoire » toute séquence quelconque, mais connue de l'émetteur et identifiable par le récepteur selon une règle prédéterminée. Cette séquence peut respecter une certaine logique (comme +100Hz, +100Hz, +100Hz, à chaque saut), ou non et être effectivement aléatoire.

La présente invention vise aussi un système selon la revendication 8.

D'autres particularités et avantages de l'invention apparaîtront à l'examen de la description d'exemples de réalisation détaillés ci-après, et des dessins annexés sur lesquels :

- La figure 1 présente un ordinogramme illustrant les étapes mises en oeuvre par un émetteur au sens de l'invention,
- La figure 2 présente un ordinogramme illustrant les étapes mises en oeuvre par un récepteur au sens de l'invention,
- La figure 3 illustre schématiquement un système comportant un émetteur et un récepteur au sens de l'invention.

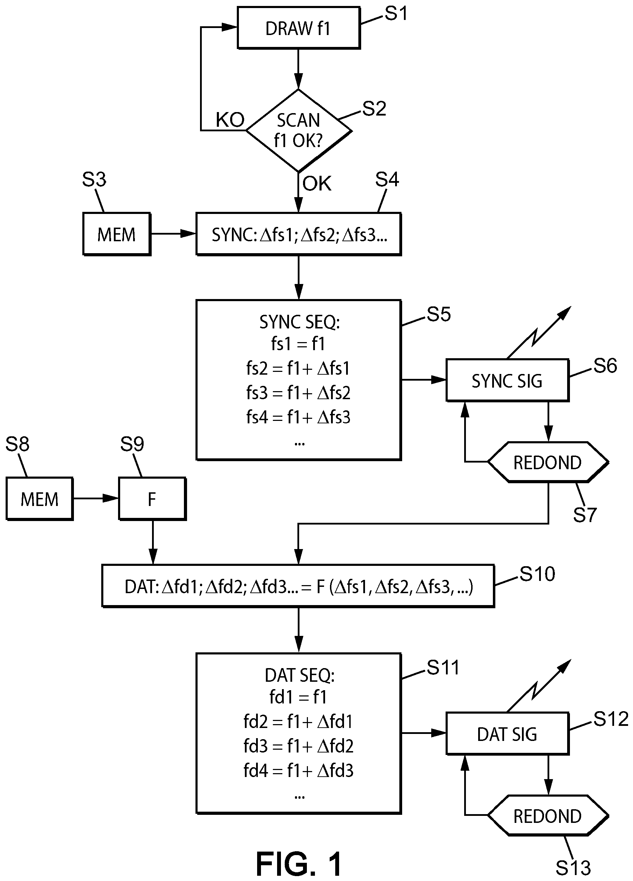

En référence à la figure 1 illustrant la mise en oeuvre d'un exemple de réalisation du procédé auprès d'un émetteur, au cours d'une première étape S1, l'émetteur tire aléatoirement une fréquence f1 dans toute la bande des fréquences disponibles (« première bande de fréquences » précitée, par exemple autour de 868 MHz pour LoRA® ou Sigfox®).

Dans un exemple de réalisation particulier, à l'étape S2, l'émetteur écoute si le canal correspondant à cette fréquence fil est occupé ou non et, si cette fréquence est déjà occupée (flèche KO en sortie du test S2), tire aléatoirement une autre fréquence f1, différente et vérifie encore la disponibilité du canal correspondant. L'émetteur peut par exemple réaliser cette étape de vérification suivant le principe « CSMA » (pour « Carrier sense multiple access ») ou « LBT » (pour « Listen before talk »). La nouvelle fréquence testée est différente de la valeur initiale, par exemple d'un écart choisi (typiquement supérieur à la bande passante du signal utile). De la sorte, il est possible de tirer parti du degré de liberté amené par le choix aléatoire de la première fréquence f1 pour limiter le risque de collision entre émissions issues d'émetteurs différents, même si ces derniers partagent une même partie au moins de séquence de sauts $\Delta fs1$, $\Delta fs2$, $\Delta fs3$, ...

Après avoir choisi une fréquence f1 dont le canal est disponible, un processeur que comporte l'émetteur retrouve, par consultation d'une mémoire MEM que comporte l'émetteur, à l'étape S3, les données d'un code pseudo-aléatoire préenregistré. Les données de ce code indiquent à l'étape 54 les écarts en fréquence $\Delta fs1$, $\Delta fs2$, $\Delta fs3$, ... respectifs à appliquer à partir d'une fréquence initiale f1, pour émettre dans des fréquences correspondantes fs1, fs2, fs3, fs4,..., des données de synchronisation SYNC dans le mode de réalisation décrit à titre d'exemple ici.

Ainsi, à l'étape S5, ces fréquences successives fs1, fs2, fs3, fs4,..., sont construites comme suit :

- $$fs1 = f1,$$

- $$fs2 = f1 + \Delta fs1,$$

- $$fs3 = f1 + \Delta fs2,$$

- $$fs4 = f1 + \Delta fs3,$$

etc.

Dans une variante, ces fréquences peuvent être définies autrement, par exemple comme suit :

- $$fs1 = f1,$$

- $$fs2 = fs1 + \Delta fs1,$$

- $$fs3 = fs2 + \Delta fs2,$$

- $$fs4 = fs3 + \Delta fs3,$$

etc.

Par ailleurs, dans une forme de réalisation, les données du code peuvent définir une durée d'émission à chaque fréquence (par exemple 500 ms à fs1, puis 300 ms à fs2, puis 600 ms à fs3, etc.). Dans une réalisation plus simple, les durées peuvent au contraire être constantes. Un signal de synchronisation peut alors être envoyé dans un premier temps, à l'étape S6, à ces fréquences d'émission fs1, fs2, fs3, fs4,... et à une cadence comme définie ci-avant.

Préférentiellement, l'émetteur envoie de façon redondante le signal de synchronisation sur ces différentes fréquences successives à l'étape S7. Cette redondance définit l'envoi de la séquence un nombre prédéterminé de fois (par exemple deux ou trois fois, ou plus), de manière à ce qu'un récepteur puisse retrouver toute la séquence des fréquences successives.

L'émetteur peut ensuite envoyer les données utiles DAT. Dans une forme de réalisation particulière décrite ci-après, les fréquences choisies pour l'envoi des données utiles sont différentes des fréquences servant à l'envoi des données de synchronisation.

Dans une forme de réalisation possible, l'émetteur peut retrouver dans sa mémoire MEM une autre séquence que définit un autre code pseudo-aléatoire pour l'envoi des données utiles, ou encore utiliser la mémoire MEM à l'étape S8 pour retrouver une fonction F permettant à l'étape S9, de façon générale, d'obtenir les écarts de fréquence à utiliser pour définir les fréquences d'émission des données utiles, à partir des écarts de fréquence utilisés pour l'envoi des données de synchronisation.

Ainsi à l'étape S10, l'émetteur peut obtenir les écarts en fréquence pour l'envoi des données utiles, notés $\Delta fd1$, $\Delta fd2$, $\Delta fd3$, ... et obtenus par application de la fonction F aux écarts de fréquence pour l'envoi des données de synchro-

nisation $\Delta fs1$, $\Delta fs2$, $\Delta fs3$,... , soit :

$$\Delta fd1, \Delta fd2, \Delta fd3, \ldots = F (\Delta fs1, \Delta fs2, \Delta fs3,\ldots)$$

Par exemple, en prenant les valeurs numériques suivantes :
$\Delta fs1$ = +30 Hz, $\Delta fs2$ = -50 Hz, $\Delta fs3$ = +80 Hz, ... , on peut définir une fonction affine très simple, du type : $\Delta fdi$ = 10 x $\Delta fsi$, de sorte que $\Delta fd1$ = +300 Hz, $\Delta fd2$ = -500 Hz, $\Delta fd3$ = +800 Hz, ...

Une telle réalisation permet par exemple de limiter la complexité du récepteur et de n'avoir à écouter la séquence du signal de synchronisation que sur une bande réduite de fréquences (par exemple -100Hz+f1 à +100Hz+f1). Une fois la séquence de synchronisation reconnue, le récepteur peut se placer ensuite progressivement sur l'ensemble des fréquences pour la réception des données utiles, lesquelles peuvent être situées dans une bande plus large (par exemple la première bande de fréquences précitée).

Cette réalisation permet plus généralement d'éviter qu'un récepteur intrus, ayant reçu la séquence des données de synchronisation, puisse identifier immédiatement la séquence des données utiles.

Par ailleurs, la séquence utilisée pour la synchronisation peut être plus courte que la séquence utilisée pour la transmission des données utiles (mais la deuxième séquence se déduisant toujours de la première par une fonction prédéfinie, ou un stockage de code correspondant en mémoire), pour permettre à un émetteur de limiter la quantité de données à émettre et économiser ainsi ses ressources.

Ensuite, à l'étape suivante S11, l'ensemble des fréquences d'émission des données utiles peut être construit comme suit :

- 

$$fd1=f1,$$

- 

$$fd2 = f1 + \Delta fd1,$$

- 

$$fd3 = f1 + \Delta fd2,$$

- 

$$fd4 = f1 + \Delta fd3,$$

etc.

Ici, la première fréquence f1 est choisie comme étant la même, à l'émission des données de synchronisation et à l'émission des données utiles, pour des raisons de simplicité puisque le canal associé a été détecté comme disponible. Néanmoins, alternativement, la séquence des écarts de fréquence pour la synchronisation peut définir aussi une première fréquence fd1 distincte de f1 pour l'émission des données utiles.

A l'étape S12, les données utiles peuvent être envoyées à ces fréquences d'émission successives fd1, fd2, fd3,..., éventuellement avec une redondance à l'étape S13.

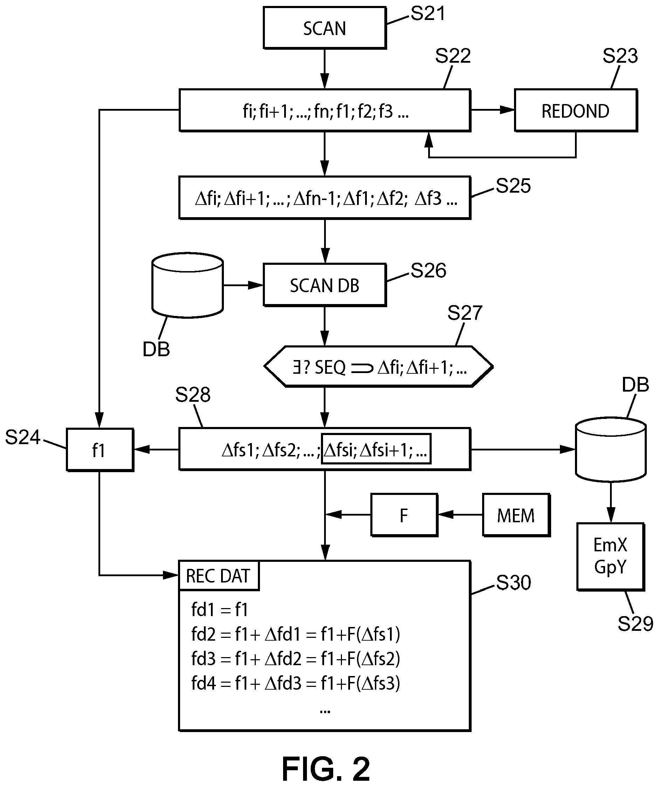

On se réfère maintenant à la figure 2 pour décrire un exemple de réalisation d'un procédé homologue mis en oeuvre par le récepteur. A l'étape S21 de la figure 2, le récepteur balaye la bande totale de fréquences (« première bande » précitée) et reçoit à l'étape S22 une succession de données de synchronisation à des fréquences de réception distinctes fi, fi+1,..., fn, f1, f2, f3, ..., la redondance de réception de ces données à l'étape S23 permettant de définir l'ensemble de ces fréquences de réception.

S'il est prévu un top de synchronisation entre l'émission à fn et l'émission à f1, alors il est possible de déterminer f1 et de là les écarts en fréquence $\Delta f1$, $\Delta f2$, $\Delta f3$, etc.

Alternativement, on peut, dans un exemple de réalisation, imposer à la séquence pseudo-aléatoire pour l'émission/réception des données de synchronisation au moins, qu'elle vérifie une propriété choisie, par exemple que la somme algébrique des écarts de fréquence $\Delta f1$, $\Delta f2$, $\Delta f3$, ... soit nulle. Ainsi, la moyenne des fréquences reçues fi, fi+1,..., fn, f1, f2, f3, ..., doit valoir la première fréquence f1. On peut en outre vérifier que la somme algébrique des écarts entre fréquences reçues est nulle pour s'assurer que les différentes fréquences reçues proviennent bien d'un même émetteur par exemple et ignorer typiquement les fréquences qui n'apparaissent plus dans les redondances.

A partir de la première fréquence f1 ainsi déterminée à l'étape S24, on en déduit à l'étape S25 les écarts de fréquence associés :

$$\Delta \text{fi} = \text{fi} - \text{f1},$$

$$\Delta \text{fi+1} = (\text{fi+1}) - (\text{f1}),$$

etc.

A l'étape S26, le récepteur se réfère à une base de données DB de séquences préenregistrées d'écarts de fréquence, chaque séquence étant par exemple propre à un émetteur (ou groupe d'émetteurs) avec lequel il peut communiquer. Le récepteur dispose donc, dans les écarts reçus $\Delta \text{fi}$, $\Delta \text{fi+1}$, etc., d'une partie au moins de séquence correspondante préenregistrée dans une mémoire MEM du récepteur. A l'étape S27, le récepteur peut exécuter par exemple une routine de comparaison (« algorithme de matching ») pour identifier à l'étape S28, dans la base de données DB, la séquence $\Delta \text{fs1}$, $\Delta \text{fs2}$, $\Delta \text{fs3}$, ..., $\Delta \text{fsi}$, $\Delta \text{fsi+1}$, ..., $\Delta \text{fsn}$, correspondant à cette partie de séquence reçue $\Delta \text{fi}$, $\Delta \text{fi+1}$, etc. Eventuellement, les délais respectifs de réception à chaque fréquence fi, fi+1, etc. peuvent aussi aider à l'identification de la séquence dans la base DB.

Le récepteur peut à ce stade, à l'étape S29, déduire de la séquence identifiée que l'émetteur répertorié en correspondance de cette séquence dans la base DB est un émetteur d'identifiant EmX, appartenant à un groupe d'émetteurs GpY car ayant par exemple une partie de séquence commune avec les émetteurs de ce groupe GpY (par exemple le début de la séquence : $\Delta \text{fs1}$, $\Delta \text{fs2}$, $\Delta \text{fs3}$).

A l'étape S30, le récepteur construit la succession de fréquences pour attendre, dans les canaux successifs correspondant à ces fréquences, la réception des données utiles, à partir de la séquence $\Delta \text{fs1}$, $\Delta \text{fs2}$, $\Delta \text{fs3}$, etc. ainsi identifiée. Dans un exemple de réalisation, les fréquences de réception sont définies, comme indiqué précédemment en référence à la figure 1, à partir de la fréquence f1 et de la séquence $\Delta \text{fs1}$, $\Delta \text{fs2}$, $\Delta \text{fs3}$ ..., comme suit :

$$\text{fd1} = \text{f1},$$

$$\text{fd2} = \text{f1} + \Delta \text{fd1},$$

$$\text{fd3} = \text{f1} + \Delta \text{fd2},$$

$$\text{fd4} = \text{f1} + \Delta \text{fd3},$$

etc.

avec $\Delta \text{fd1}$, $\Delta \text{fd2}$, ...= $F(\Delta \text{fs1}, \Delta \text{fs2}, ...)$, F étant la fonction prédéfinie à l'émetteur et au récepteur et dont les données peuvent être stockées dans une mémoire MEM du récepteur. Par exemple :

$$\Delta \text{fd1} = 10 \, \Delta \text{fs1} \, ;$$

$$\Delta \text{fd2} = 10 \, \Delta \text{fs2} \, ;$$

etc.

Dans l'exemple ci-avant, on a décrit des écarts de fréquence différents pour l'envoi des données de synchronisation et l'envoi des données utiles. Toutefois, les écarts peuvent être les mêmes entre ces deux envois. D'ailleurs, on relèvera en outre qu'il n'est pas forcément nécessaire de prévoir un envoi de données de synchronisation, la redondance de l'envoi des données utiles permettant d'assurer la réception de toutes les fréquences fd1, fd2, fd3, ... fdn, et de là, d'en déduire la première fréquence f1 et la séquence utilisée $\Delta \text{fd1}$, $\Delta \text{fd2}$, $\Delta \text{fd3}$, pour l'envoi des données utiles. On relèvera plus généralement, que la séquence générée pseudoaléatoirement à l'émetteur n'a pas besoin d'être connue du récepteur. En effet, grâce à la redondance, la connaissance de toute la séquence peut être déduite d'une règle prédéterminée (par exemple la somme algébrique des écarts Δf1, Δf2, Δf3, etc., est nulle, et la fréquence moyenne correspond à la première fréquence f1).

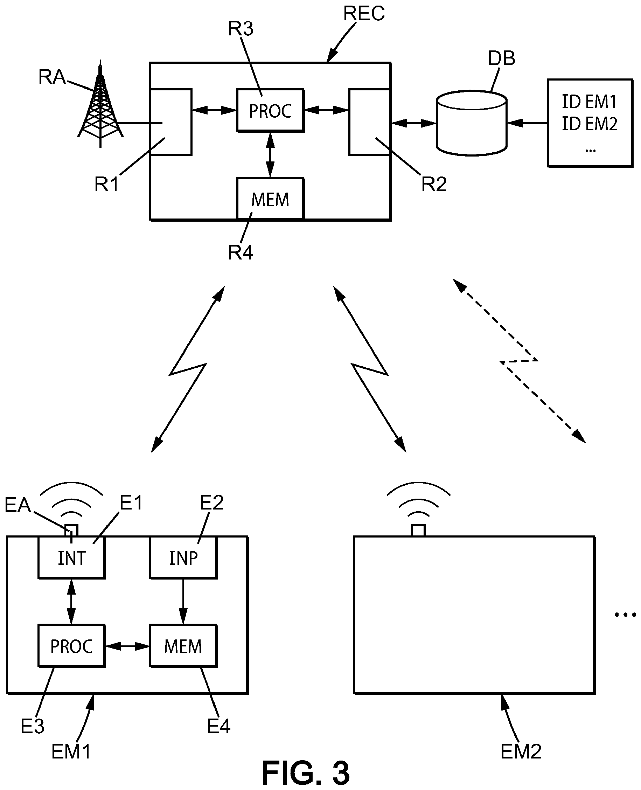

On a illustré sur la figure 3 les éléments matériels d'un système comportant un récepteur et un ou plusieurs émetteurs selon un exemple de réalisation de l'invention. Dans l'exemple illustré, le récepteur REC comporte une antenne de réception RA, reliée par une interface R1, à un processeur R3 capable d'interpréter les signaux reçus et en déduire les séquences respectives, par coopération avec une mémoire R4 stockant typiquement des instructions d'un programme informatique au sens de l'invention, ainsi que des données temporaires éventuelles. Cette mémoire R4 peut stocker en outre le contenu de la base de données, ou en variante coopérer via l'interface R2 avec une base de données distante DB, stockant en outre des identifiants d'émetteurs ID EM1, ID EM2, etc. (et/ou de groupes d'émetteurs).

À titre d'exemple, un émetteur correspondant EM1, comporte typiquement une antenne EA reliée par une interface E1 à un processeur E3 pour former les signaux de données à émettre (synchronisation ou données utiles), selon une séquence construite par coopération avec une mémoire E4 stockant typiquement des instructions d'un programme informatique au sens de l'invention (ainsi que des données temporaires éventuelles). L'émetteur EM1 peut comporter en outre une autre interface E2 pour accéder à la mémoire E4 et y stocker les instructions précitées, ainsi que le code pseudo-aléatoire définissant la séquence utilisée pour l'envoi des données de synchronisation et/ou la séquence utilisée pour l'envoi des données utiles.

Par rapport à l'état de l'art, l'approche de l'invention apporte notamment les avantages suivants aux systèmes à saut de fréquence classiques :

- elle ne nécessite aucune synchronisation préalable, ni en temps, ni en fréquence entre l'émetteur et le récepteur puisque le récepteur s'adapte entièrement aux émissions de l'émetteur : le récepteur est donc particulièrement adapté aux émetteurs équipés d'oscillateurs de faible qualité et ayant donc une maitrise très limitée de leur réelle fréquence d'émission, ce qui est typiquement le cas des terminaux à faible coût et basse consommation de l'Internet des Objets ;
- au contraire de la plupart des systèmes à saut de fréquence, aucune convention d'une fréquence initiale ou canal d'émission initial n'est nécessaire pour déclencher le début du saut de fréquence (cas typique de la première fréquence de saut, utilisée en canal sémaphore) : cette première émission peut être effectuée n'importe où dans le spectre ; elle n'est pas plus indispensable que les fragments de signaux qui la suivent, ce qui peut d'ailleurs accroître la robustesse du système aux brouillages ;
- la possibilité de transmettre de l'information dans la séquence de sauts en elle-même est un autre avantage (même pendant la recherche de synchronisation du récepteur) : elle permet d'envisager un système de saut de fréquence utilisant plusieurs séquences de saut dans une même transmission afin d'optimiser l'utilisation de la ressource radio ; par exemple, un début de séquence de sauts, unique et associé à un groupe donné d'émetteurs, peut être utilisé pour initier la synchronisation (incluant éventuellement une information *a minima* concernant ce groupe d'émetteurs), puis une partie complémentaire dans la séquence de synchronisation peut caractériser l'un de ces émetteurs pour la partie communication à proprement parler avec cet émetteur.

Il en découle pour l'essentiel une meilleure furtivité et une plus grande robustesse, et surtout un relâchement général des contraintes sur l'implémentation radio qui rend accessible le saut de fréquences aux systèmes radio les plus contraints.

Toutefois, les débits restent nécessairement faibles et une partie de la complexité est reportée sur le récepteur. Néanmoins, dans une application aux objets connectés, cette contrainte peut être respectée dans la mesure où les récepteurs sont bien moins contraints que les émetteurs. D'ailleurs, tel est déjà actuellement le cas dans les systèmes à bande très étroites. Par rapport aux systèmes à bande étroite classique, le principal intérêt de l'invention est de leur permettre de tirer parti d'un canal radio large bande, sans pour autant compromettre ni leur objectif de cout et consommation électrique très faible, ni la sensibilité du système.

L'algorithme permettant au récepteur de se synchroniser sur la séquence de sauts en fréquence en utilisant uniquement les distances entre sauts consécutifs, sans faire usage d'une référence absolue, fournit néanmoins à la fois une robustesse à la perte d'une partie de l'information, et une fiabilité dans l'acquisition de synchronisation sur un signal « légitime » (dans le sens où l'identité de l'émetteur est assurée par ce moyen).

L'invention est avantageuse pour une utilisation dans le contexte de l'Internet des Objets, lequel nécessite d'apporter une capacité de communication à la fois robuste et fiable mais aussi peu coûteuse et économe en énergie à des objets incapables de recevoir des moyens de communications usuels, principalement pour des raisons de prix et de consommation énergétique. Cette invention apporte en effet, pour un surcout négligeable, à la fois plus de souplesse et de robustesse aux interfaces radio existantes, conçues pour ce type d'usage, tout en fiabilisant le lien radio.

**Revendications**

1. Procédé de télécommunication de données par sauts de fréquence dans une première bande de fréquences, dans lequel les sauts de fréquence suivent une séquence temporelle prédéterminée, connue au moins par un émetteur des données, **caractérisé en ce qu'**il comporte les étapes, mises en oeuvre par ledit émetteur de données :

   - définir, à partir d'un tirage pseudo-aléatoire, des valeurs successives d'écarts respectifs en fréquence ($\Delta$fs1, $\Delta$fs2, $\Delta$fs3, ) pour déterminer la séquence temporelle de sauts à partir d'une première fréquence (f1),
   - émettre à destination d'au moins un récepteur des données de synchronisation

      • à une première fréquence (f1), ladite première fréquence étant choisie aléatoirement (S1) dans la première bande de fréquences,
      • puis à un premier jeu de fréquences successives (fs2, fs3,...) respectant, à partir de la première fréquence, lesdites valeurs successives d'écarts respectifs en fréquence ($\Delta$fs1, $\Delta$fs2, $\Delta$fs3,...), lesdites valeurs successives d'écarts en fréquence définissant, à la réception, une succession de fréquences de réception de données utiles à recevoir dudit émetteur de données,

   - définir (S9) une séquence ($\Delta$fd1, $\Delta$fd2, $\Delta$fd3,...) pour l'émission des données utiles à partir d'une séquence utilisée pour l'émission de données de synchronisation, en utilisant une règle prédéterminée (F), connue de l'émetteur et du récepteur, ladite séquence utilisée pour l'émission de données de synchronisation étant stockée dans une base de données (DB) stockant des tirages pseudo-aléatoires définissant des séquences utilisées pour l'émission de données de synchronisation, le récepteur étant connecté à ladite base de données ,
   - émettre à destination du récepteur les données utiles

      • à la première fréquence (fd1= f1),
      • puis (S11) à un deuxième jeu de fréquences successives respectant, à partir de la première fréquence, la séquence d'émission définie par la règle prédéterminée ;

   le procédé comprenant en outre les étapes suivantes, mises en oeuvre par le récepteur de données :

      - balayer la première bande de fréquences (S21) pour identifier la première fréquence (S24) et une première partie au moins desdites fréquences successives respectant, à partir de la première fréquence, lesdites valeurs successives d'écarts respectifs en fréquence ($\Delta$fi, $\Delta$fi+1, ...),
      - déterminer des écarts en fréquence successifs (S25) à partir de la première fréquence identifiée par le balayage de la première bande de fréquences (S24),
      - comparer (S27) lesdits écarts en fréquence successifs, à des écarts en fréquence de séquences correspondant aux tirages pseudo-aléatoires stockés dans la base de données, et
      - identifier (S28), à l'issue de ladite comparaison, la séquence temporelle utilisée par l'émetteur pour recevoir (S30) des données utiles sur les fréquences successives de la séquence ainsi identifiée, en utilisant la règle prédéterminée à partir de la séquence utilisée pour les données de synchronisation.

2. Procédé selon la revendication 1, **caractérisé en ce qu'**il comporte une étape, préalable à l'émission, dans laquelle :

   - après un tirage aléatoire de la première fréquence, l'émetteur écoute (S2) dans la première bande ladite première fréquence avant toute émission, pour une vérification de disponibilité d'un canal d'émission correspondant à la première fréquence, et :
   - si le canal est libre, procéder à une émission sur la première fréquence puis à des fréquences successives respectant lesdits écarts en fréquence,
   - si le canal est occupé :

      • choisir aléatoirement une autre première fréquence,
      • et répéter la vérification de disponibilité du canal d'émission correspondant, jusqu'à trouver un canal disponible.

3. Procédé selon la revendication 1, **caractérisé en ce que** le premier jeu (fs2, fs3, ...) est identique au deuxième jeu (fd2, fd3, ...).

4. Procédé selon l'une des revendications précédentes, **caractérisé en ce que** l'émetteur répète un nombre de fois prédéterminé ladite séquence d'émission de données (S7 ; S13), à ladite première fréquence puis auxdites fréquences successives.

**5.** Procédé selon l'une des revendications précédentes, **caractérisé en ce qu'**une partie au moins des écarts respectifs en fréquence de la séquence contribue à définir un identifiant de l'émetteur (S29).

**6.** Procédé selon la revendication 5, **caractérisé en ce qu'**une première partie des écarts respectifs en fréquence de la séquence contribue à définir un groupe d'appartenance (GpY) de l'émetteur et une seconde partie des écarts respectifs en fréquence de la séquence contribue à définir l'identifiant propre à l'émetteur (EmX) dans ce groupe.

**7.** Procédé selon l'une des revendications 5 et 6, **caractérisé en ce que** les sauts d'une fréquence à l'autre dans la séquence sont définis à des intervalles de temps successifs qui sont variables dans la séquence, et **en ce que** lesdits intervalles de temps successifs contribuent en outre à définir un identifiant de l'émetteur.

**8.** Système comportant au moins un émetteur (Em1) comportant un premier circuit logique et un récepteur (REC) comportant un deuxième circuit logique, les premier et deuxième circuits logiques étant programmés pour la mise en oeuvre du procédé selon l'une des revendications 1 à 7.

**Patentansprüche**

**1.** Verfahren zur Datentelekommunikation durch Frequenzsprünge in einem ersten Frequenzband, bei dem die Frequenzsprünge einer vorbestimmten zeitlichen Sequenz folgen, die mindestens einem Sender der Daten bekannt ist, **dadurch gekennzeichnet, dass** es die folgenden, von dem Datensender durchgeführten Schritte umfasst:

- Definieren, ausgehend von einer pseudozufälligen Auswahl, der aufeinander folgenden Werte von jeweiligen Frequenzabweichungen ($\Delta$fs1, $\Delta$fs2, $\Delta$fs3, ), um die zeitliche Sequenz von Sprüngen ausgehend von einer ersten Frequenz (f1) zu bestimmen,
- Senden der Synchronisationsdaten an mindestens einen Empfänger

• mit einer ersten Frequenz (f1), wobei die erste Frequenz in dem ersten Frequenzband zufällig gewählt wird (S1),
• dann mit einem ersten Satz aufeinander folgender Frequenzen (fs2, fs3,...), die, ausgehend von der ersten Frequenz, die aufeinander folgenden Werte von jeweiligen Frequenzabweichungen ($\Delta$fs1, $\Delta$fs2, $\Delta$fs3,...) einhalten, wobei die aufeinander folgenden Werte von Frequenzabweichungen, beim Empfang, eine Abfolge von Empfangsfrequenzen von zu empfangenden Nutzdaten des Datensenders definieren,

- Definieren (S9) einer Sequenz ($\Delta$fd1, $\Delta$fd2, $\Delta$fd3,...) für das Senden der Nutzdaten ausgehend von einer für das Senden von Synchronisationsdaten verwendeten Sequenz unter Verwendung einer vorbestimmten Regel (F), die dem Sender und dem Empfänger bekannt ist, wobei die für das Senden von Synchronisationsdaten verwendete Sequenz in einer Datenbank (DB) gespeichert ist, die pseudozufällige Auswahlen speichert, die Sequenzen definieren, die für das Senden von Synchronisationsdaten verwendet werden, wobei der Empfänger mit der Datenbank verbunden ist,
- Senden der Nutzdaten an den Empfänger

• mit der ersten Frequenz (fd1= f1),
• dann (S11) mit einem zweiten Satz aufeinander folgender Frequenzen, die, ausgehend von der ersten Frequenz, die durch die vorbestimmte Regel definierte Sendesequenz einhalten;

wobei das Verfahren ferner die folgenden von dem Datenempfänger durchgeführten Schritte umfasst:

- Abtasten des ersten Frequenzbands (S21), um die erste Frequenz zu identifizieren (S24) und mindestens einen ersten Teil der aufeinander folgenden Frequenzen, die, ausgehend von der ersten Frequenz, die aufeinander folgenden Werte von jeweiligen Frequenzabweichungen ($\Delta$fi, $\Delta$fi+1, ...) einhalten,
- Bestimmen der aufeinander folgenden Frequenzabweichungen (S25) ausgehend von der durch das Abtasten des ersten Frequenzbands (S24) identifizierten ersten Frequenz,
- Vergleichen (S27) der aufeinander folgenden Frequenzabweichungen mit Frequenzabweichungen von Sequenzen, die den pseudozufälligen Auswahlen entsprechen, die in der Datenbank gespeichert sind, und

- Identifizieren (S28), nach dem Vergleichen, der zeitlichen Sequenz, die von dem Sender verwendet wurde, um Nutzdaten über die aufeinander folgenden Frequenzen der so identifizierten Sequenz zu empfangen (S30), unter Verwendung der vorbestimmten Regel ausgehend von der für die Synchronisationsdaten verwendeten Sequenz.

2. Verfahren nach Anspruch 1, **dadurch gekennzeichnet, dass** es, vor dem Senden, einen Schritt umfasst, bei dem:

- nach einer zufälligen Auswahl der ersten Frequenz, der Sender in dem ersten Band die erste Frequenz vor jedem Senden abhört (S2), zwecks einer Überprüfung der Verfügbarkeit eines Sendekanals, welcher der ersten Frequenz entspricht, und:
- wenn der Kanal frei ist, ein Senden auf der ersten Frequenz vorgenommen wird, dann mit aufeinander folgenden Frequenzen, welche die Frequenzabweichungen einhalten,
- wenn der Kanal besetzt ist:

  • zufällig eine andere erste Frequenz gewählt wird,
  • und die Überprüfung der Verfügbarkeit des entsprechenden Sendekanals wiederholt wird, bis ein verfügbarer Kanal gefunden wird.

3. Verfahren nach Anspruch 1, **dadurch gekennzeichnet, dass** der erste Satz (fs2, fs3, ...) identisch mit dem zweiten Satz (fd2, fd3, ...) ist.

4. Verfahren nach einem der vorhergehenden Ansprüche, **dadurch gekennzeichnet, dass** der Sender die Datensendesequenz (S7; S13) mit einer vorbestimmten Häufigkeit wiederholt, mit der ersten Frequenz, dann mit den aufeinander folgenden Frequenzen.

5. Verfahren nach einem der vorhergehenden Ansprüche, **dadurch gekennzeichnet, dass** mindestens ein Teil der jeweiligen Frequenzabweichungen der Sequenz dazu beiträgt, eine Kennung des Senders zu definieren (S29).

6. Verfahren nach Anspruch 5, **dadurch gekennzeichnet, dass** ein erster Teil der jeweiligen Frequenzabweichungen der Sequenz dazu beiträgt, eine Zugehörigkeitsgruppe (GpY) des Senders zu definieren, und ein zweiter Teil der jeweiligen Frequenzabweichungen dazu beiträgt, die spezifische Kennung des Senders (EmX) in dieser Gruppe zu definieren.

7. Verfahren nach einem der Ansprüche 5 und 6, **dadurch gekennzeichnet, dass** die Sprünge von einer Frequenz zur anderen in der Sequenz mit aufeinander folgenden Zeitintervallen definiert sind, die in der Sequenz variabel sind, und dass die aufeinander folgenden Zeitintervalle ferner dazu beitragen, eine Kennung des Senders zu definieren.

8. System, das mindestens einen Sender (Em1) umfasst, der eine erste logische Schaltung umfasst, und einen Empfänger (REC), der eine zweite logische Schaltung umfasst, wobei die ersten und zweiten logischen Schaltungen zur Durchführung des Verfahrens nach einem der Ansprüche 1 bis 7 programmiert sind.

## Claims

1. Data telecommunications method based on frequency hops in a first frequency band, wherein the frequency hops follow a predetermined time sequence, known at least to a transmitter of the data, **characterized in that** it comprises the following steps, implemented by said data transmitter:

- defining, based on a pseudorandom draw, successive values of respective frequency spacings ($\Delta$fs1, $\Delta$fs2, $\Delta$fs3,...) in order to determine the hop time sequence based on a first frequency (f1),
- transmitting synchronization data to at least one receiver

  • at a first frequency (f1), said first frequency being chosen randomly (S1) within the first frequency band,
  • and then at a first set of successive frequencies (fs2, fs3,...) complying, based on the first frequency, with said successive values of respective frequency spacings ($\Delta$fs1, $\Delta$fs2, $\Delta$fs3,...), said successive values of frequency spacings defining, at reception, a succession of reception frequencies of payload data to be received from said data transmitter,

- defining (S9) a sequence (Δfd1, Δfd2, Δfd3,...) for the transmission of the payload data based on a sequence used to transmit synchronization data, using a predetermined rule (F), known to the transmitter and the receiver, said sequence used to transmit synchronization data being stored in a database (DB) storing pseudorandom draws defining sequences used to transmit synchronization data, the receiver being connected to said database,
- transmitting the payload data to the receiver

• at the first frequency (fd1=f1),
• and then (S11) at a second set of successive frequencies complying, based on the first frequency, with the transmission sequence defined by the predetermined rule;

the method furthermore comprising the following steps, implemented by the data receiver:

- scanning the first frequency band (S21) to identify the first frequency (S24) and at least a first portion of said successive frequencies complying, based on the first frequency, with said successive values of respective frequency spacings (Δfi, Δfi+1, ...),
- determining successive frequency spacings (S25) based on the first frequency identified by the scanning of the first frequency band (S24),
- comparing (S27) said successive frequency spacings with frequency spacings of sequences corresponding to the pseudorandom draws stored in the database, and
- identifying (S28), at the end of said comparison, the time sequence used by the transmitter to receive (S30) payload data on the successive frequencies of the sequence thus identified, using the predetermined rule based on the sequence used for the synchronization data.

2. Method according to Claim 1, **characterized in that** it comprises a step, prior to the transmission, in which:

- after a random draw of the first frequency, the transmitter listens (S2), in the first band, on said first frequency before any transmission, to check availability of a transmission channel corresponding to the first frequency, and:
- if the channel is free, carrying out transmission on the first frequency and then at successive frequencies complying with said frequency spacings,
- if the channel is busy:

• randomly choosing another first frequency,
• and repeating the availability check for the corresponding transmission channel until finding an available channel.

3. Method according to Claim 1, **characterized in that** the first set (fs2, fs3, ...) is identical to the second set (fd2, fd3, ...).

4. Method according to one of the preceding claims, **characterized in that** the transmitter repeats said data transmission sequence (S7; S13) a predetermined number of times at said first frequency and then at said successive frequencies.

5. Method according to one of the preceding claims, **characterized in that** at least a portion of the respective frequency spacings of the sequence contributes to defining an identifier of the transmitter (S29).

6. Method according to Claim 5, **characterized in that** a first portion of the respective frequency spacings of the sequence contributes to defining a group (GpY) to which the transmitter belongs and a second portion of the respective frequency spacings of the sequence contributes to defining the identifier specific to the transmitter (EmX) in this group.

7. Method according to either of Claims 5 and 6, **characterized in that** the hops from one frequency to another in the sequence are defined at successive time intervals that are variable within the sequence, and **in that** said successive time intervals furthermore contribute to defining an identifier of the transmitter.

8. System comprising at least one transmitter (Em1) comprising a first logic circuit and one receiver (REC) comprising a second logic circuit, the first and second logic circuits being programmed to implement the method according to one of Claims 1 to 7.

DRAW f1 — S1

KO ◄— SCAN f1 OK? — S2

OK

S3 — MEM ──► SYNC: $\Delta$fs1; $\Delta$fs2; $\Delta$fs3... — S4

SYNC SEQ:
fs1 = f1
fs2 = f1+ $\Delta$fs1
fs3 = f1+ $\Delta$fs2
fs4 = f1+ $\Delta$fs3
... — S5

SYNC SIG — S6

REDOND — S7

S8 — MEM ──► S9 — F

DAT: $\Delta$fd1; $\Delta$fd2; $\Delta$fd3... = F ($\Delta$fs1, $\Delta$fs2, $\Delta$fs3, ...) — S10

DAT SEQ:
fd1 = f1
fd2 = f1+ $\Delta$fd1
fd3 = f1+ $\Delta$fd2
fd4 = f1+ $\Delta$fd3
... — S11

DAT SIG — S12

REDOND — S13

# FIG. 1

**FIG. 2**

**FIG. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2277231 A
- US 20040228267 A1

- WO 2004054280 A